# EUROPEAN PATENT SPECIFICATION

(11) **EP 2 436 263 B1**
(45) Date of publication and mention of the grant of the patent: **16.08.2017**
(21) Application number: 11007540.5
(22) Date of filing: 15.09.2011
(51) Int. Cl.: A01G 3/053, B25F 5/00

(54) **Portable working machine**
Tragbare Arbeitsmaschine
Machine de travail portable

(30) Priority: 29.09.2010 JP 2010218678
(43) Date of publication of application: 04.04.2012
(73) Proprietor: Hitachi Koki Co., Ltd., Minato-ku Tokyo 108-6020 (JP)
(72) Inventor: Tamura, Fukushi, Hitachinaka-shi Ibaraki 312-8502 (JP); Kakefuda, Shinichi, Hitachinaka-shi Ibaraki 312-8502 (JP)
(74) Representative: Strehl Schübel-Hopf & Partner

(56) References cited:
- DE-A1- 19 925 281
- US-A1- 2004 119 216
- US-A1- 2006 000 438
- US-A1- 2009 095 497

## Description

### TECHNICAL FIELD

Aspects of the invention relates to an antivibration mechanism in a portable working machine and more particularly to a portable working machine in which an antivibration device member and a power unit can easily be fixed.

### BACKGROUND

Engines are widely used as a power source in portable working machines such as hedge trimmers. Engines are advantageous in that large output can be obtained although they are small in size and light in weight and in that they can continue to work over many hours by being supplied with fuel. However, in engines, a piston reciprocates within a cylinder, and an explosion occurs when air-fuel mixture burns. Thus, engines are disadvantageous in that larger vibration is generated, compared with electric motors. As an example of a portable working machine which employs an engine as a power source, a hedge trimmer like one described in JP-A-2010-81891 has been known. The hedge trimmer described in JP-A-2010-81891 has a front handle ad a rear handle which are disposed in front of and behind an engine functioning as a power source, and a drive blade extending to the front is reciprocated in a front-to-rear direction by the engine.

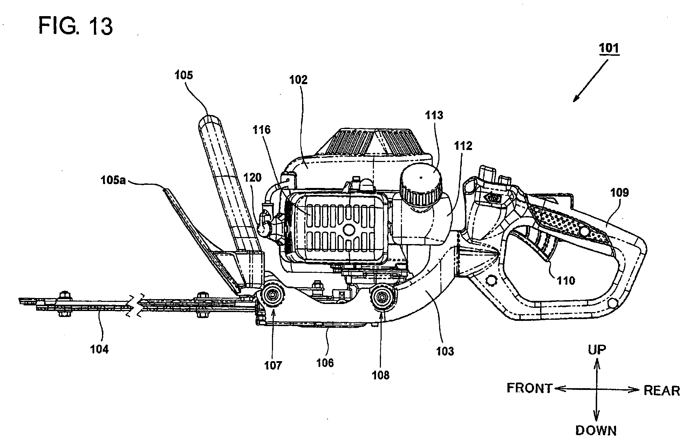

Here, referring to Figs. 13 to 16, a related-art portable working machine will be described which employs an engine as a power source. Here, a hedge trimmer will be described as an example of the portable working machine. Fig. 13 is a side view of a related-art hedge trimmer 101. The hedge trimmer 101 shown in Fig. 13 employs, as a power source, a small, two-cycle engine (not shown) which is accommodated in an interior of an engine cover 102. The hedge trimmer 101 has a frame 103. A front handle 105 which is gripped by, for example, the left hand of the operator is attached to a front of the frame 103, and a rear handle 109 which is gripped by, for example, the right hand of the operator is provided at a rear of the frame 103.

The engine is held by the frame 103 via a plurality of antivibration devices. A gear case 106 is provided below the engine to the frame 103, and a blade unit 104 is fixed so as to extend to the front from the gear case 106. The gear case 106 accommodates a power conversion mechanism for converting an output of the engine into reciprocating motions to drive the blade unit 104. The engine and the gear case 106 are fixed directly to each other. In addition, the frame 103, the front handle 105, and the rear handle 109 are fixed firmly with screws or bolts so as to generate no looseness. However, the assembly unit made up of the engine, the gear case 106 and the blade unit 104 is held by the frame 103, so as to be elastic relative to the frame 103, via antivibration devices in front-side fixing positions 107 and rear-side fixing positions 108. Note that the antivibration devices, not shown, are disposed inside the frame 103 and hence cannot be seen in the side view shown in Fig. 13.

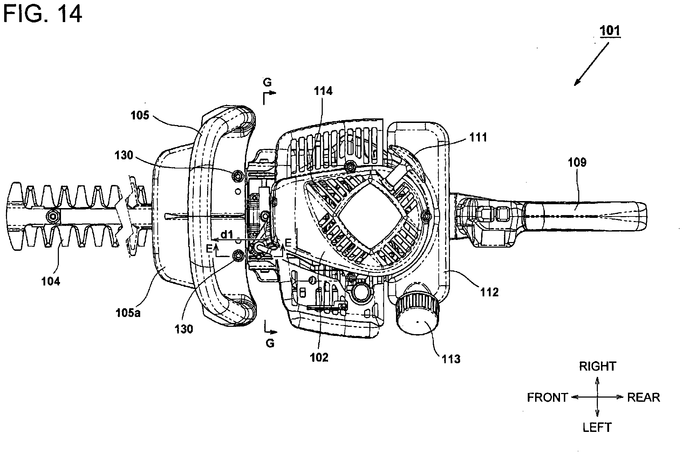

Fig. 14 is a plan view of the related-art hedge trimmer 101. When the hedge trimmer 101 is seen from an upside, the blade unit 104, the front handle 105, the engine 114, a fuel tank 112 and the rear handle 109 are disposed sequentially in this order from a front side of the hedge trimmer 101. The engine 114 is covered with an engine cover 102, and the engine cover 102 and the front handle 105 are disposed so that a predetermined space d1 is defined between an upper portion of the engine cover 102 and a central portion of the front handle 105. The front handle 105 is fixed to the vicinity of a front end of the frame 103 (further forwards than the front-side fixing position 107 in Fig. 13) with two bolts 130 which are disposed in a vertical direction. The rear handle 109 is attached to a rear end of the frame 103 and is held so as to be rotatable from side to side relative to the frame 103.

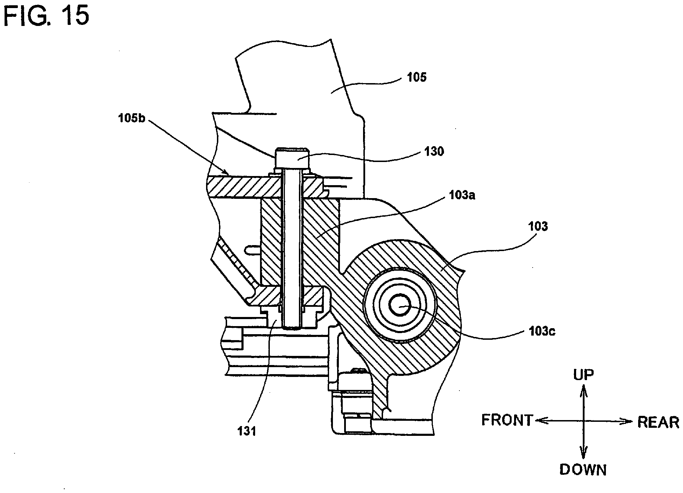

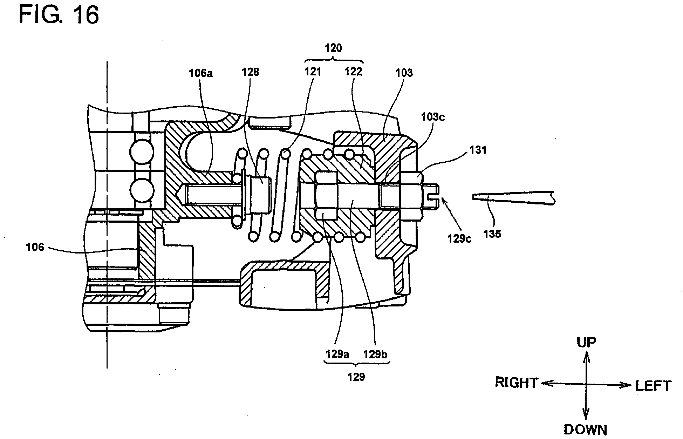

Fig. 15 is a partial sectional view taken along the line E-E in Fig. 14, showing an attaching configuration of the front handle 105 to the frame 103. An attachment portion 105b of the front handle 105 is fixed to a front handle attachment boss 103a provided at a distal end of the frame 103 with bolts 130 and nuts 131. The boss 103a is formed integrally with the frame 103 so as to project further forwards than attachment holes 103c which are formed in the front-side fixing positions 107 of the antivibration mechanism of the frame 103.
Next, a fixing method of the gear case 106 and an antivibration device 120 will be described by using Fig. 16. The antivibration device 120 includes mainly a coil spring 121 which is an elastic member and a spring holder 122 which holds the spring 121. One end portion of the spring 121 is fixed to an attachment portion 106a of the gear case 106 (an engine side assembly) with a bolt 128, and the other end portion is fixed to the frame 103 via the spring holder 122. A female screw is formed in the attachment portion 106a, and the hexagonal socket bolt 128, in which a washer is installed, is fittingly screwed with the attachment portion 106a. A head portion 129a and about a half of a main shaft 129b of an insert bolt 129 are embedded in the spring holder 122, and the remaining half of the main shaft 129b projects to the outside via the attachment hole 103c formed in the frame 103. Then, the nut 131 is screwed on to the remaining half of the main shaft 129b projecting to the outside, whereby the spring holder 122 is fixed to the frame 103. When screwing the nut 131, the nut 131 needs to be screwed while holding a slotted screw groove 129c, which is formed in a distal end of the insert bolt 129, with a tool 135 such as a slotted screw driver, so as to prevent the spring holder 122 from rotating together with the nut 131.

In the related-art hedge trimmer 101, the member of the antivibration device 120, such as the spring holder 122 and the frame 103 and the front handle 105, are fixed with separate bots and nuts, thereby making the assembling troublesome. In addition, the related-art configuration disturbed the reduction in weight of the components. Further, when fastening the spring holder 122 and the frame 103 with the nut 131, the nut 131 needs to be screwed to the insert bolt 129 while fixing the insert bolt 129 with the tool 135 which is different from the tool used in screwing the nut 131. Thus, two different types of tools are needed to be used simultaneously, thereby being troublesome.

DE 199 25 281 A1 discloses a hedge trimmer having a front handle which comprises a handle section for a user to hold the hedge trimmer, an attachment section for attachment of the handle to a transmission housing of the hedge trimmer, and an intermediate section which interconnects the handle and attachment sections and has elastic characteristics to absorb vibrations generated by an engine of the hedge trimmer. The invention has the features recited in the characterizing portion of claim 1 in common with this prior art.

### SUMMARY OF THE INVENTION

It is an object of the invention to provide a portable working machine which has effective anti-vibration characteristics and can be easily and economically assembled.

This object is solved by a portable working machine as set forth in claim 1. The dependent claims relate to preferred embodiments of the invention.

Embodiments provide a portable working machine having an antivibration device which can effectively dampen excessive displacement exerted on a working portion while the working machine is used.

Embodiments provide a portable working machine having an antivibration device which can realize a reduction in manufacturing cost without increasing the number of components involved.

The above and other objects and novel characteristics of the invention will become clear from the description of the following specification and the accompanying drawings.

According to an embodiment of the invention, there is provided a portable working machine comprising: an engine; a frame which holds the engine; front handle and a rear handle which are provided to the frame; and a power conversion unit for transmitting an output from the engine to drive a working tool, wherein the engine, the power conversion unit and the working tool being held by the frame via an elastic member, and wherein the front handle and the elastic member are disposed so that an axis passing through a center of an attachment portion of the front handle and an axis passing through a center of an attachment portion of the elastic member substantially coincide with each other.

### BRIEF DESCRIPTION OF DRAWINGS

Fig. 1 is a side view of a hedge trimmer 1 which is an example of a portable working machine according to an exemplary embodiment of the invention;
Fig. 2 is a plan view of the hedge trimmer 1 according to the exemplary embodiment of the invention;
Fig. 3 is a bottom view of the hedge trimmer 1 according to the exemplary embodiment of the invention;
Fig 4 is a front view of the hedge trimmer 1 according to the exemplary embodiment of the invention;
Fig. 5 is a rear view of the hedge trimmer 1 according to the exemplary embodiment of the invention;
Fig. 6 is a side view of a frame 3 alone of the hedge trimmer 1 according to the exemplary embodiment of the invention;
Fig. 7 is a partial sectional view (taken along line A-A in Fig. 2) of the vicinity of an attachment portion of a front handle 5 of the hedge trimmer 1;
Fig. 8 is an external view of an antivibration device 20 of the hedge trimmer 1 according to the exemplary embodiment of the invention;
Fig. 9 (9A, 9B) shows external views of a spring 21 shown in Fig. 8, of which Fig. 9A is a side view, and Fig. 9B is a view seen from a direction indicated by an arrow C in Fig. 9A;
Fig. 10 (10A, 10B) shows external views of a spring holder 22 shown in Fig. 8, of which Fig. 10A is a side view, and Fig. 10B is a view seen from a direction indicated by an arrow D in Fig. 10A;
Fig. 11 is a sectional view of an attachment portion of a front handle 5 and an antivibration device 40 according to a second exemplary embodiment of the invention (when a compression load F1 is exerted);
Fig. 12 is a sectional view of an attachment portion of a front handle 5 and an antivibration device 50 according to a third exemplary embodiment of the invention (when a radial load F2 is exerted);
Fig. 13 is a side view of a related-art hedge trimmer 101;
Fig. 14 is a plan view of the related-art hedge trimmer 101;
Fig. 15 is a partial sectional view (taken along the line E-E) of the vicinity of an attachment portion of a front handle 105 of the hedge trimmer 101 shown in Fig. 14; and
Fig. 16 is a partial sectional view (taken along the line G-G) of the vicinity of an attachment portion of an antivibration device 120 of the hedge trimmer 101 shown in Fig. 14.

### DETAILED DESCRIPTION

### [First Exemplary Embodiment]

Hereinafter, an exemplary embodiment of the invention will be described based on the drawings. Note that in the drawings referred to hereinafter, same reference numerals will be given to same elements, and the repetition of the same description will be omitted. In addition, when directions are referred to in this specification, directions shown in the accompanying drawings should be referred to for understanding the description of the specification.

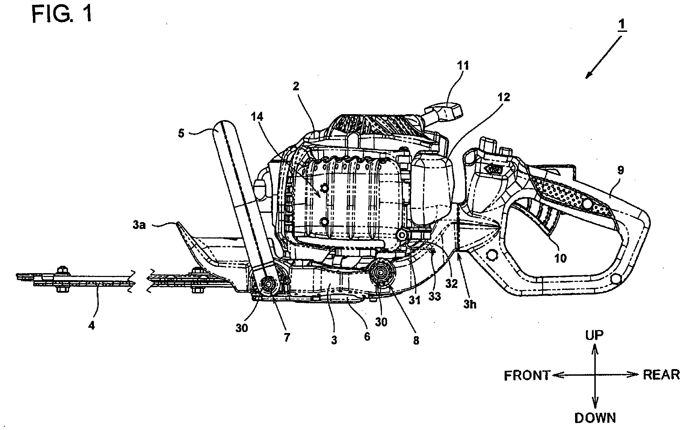

Fig. 1 is a side view of a hedge trimmer 1 which is an example of a portable working machine according to an exemplary embodiment of the invention. The hedge trimmer 1 has a frame 3. A front handle 5 which is gripped by, for example, the left hand of an operator is provided at the front of the frame 3, and a rear handle 9 which is gripped by, for example, the right hand of the operator is provided at the rear of the frame 3. The frame 3 is formed of a synthetic resin such as a reinforced plastic through integral molding. The rear handle 9 is movable and can rotate about 90 degrees horizontally to the left and right at a connecting portion 3h with the frame 3. A throttle trigger 10 for an engine 14 is provided to the rear handle 9.

The engine 14 is a small two-cycle engine, for example, and operates by using a blended fuel in which oil is blended with gasoline. The engine 14 and peripheral equipment necessary of the operation of the engine 14 such as a carburetor, an exhaust device and a starter are covered by an engine cover 2. Note that in Fig. 1, the engine 14 is covered by the engine cover 2 and hence can not be seen directly from the outside. Thus, the position of the engine 14 is indicated by an arrow. A recoil starter (not shown) and a knob 11 for use in pulling a cord of the starter are provided above the engine 14. A fuel tank 12 is provided at the rear of the engine 14. The fuel tank 12 is made of, for example, translucent resin, so that the amount of residual fuel can be viewed from the exterior.

A gear case 6 is mounted within a space lying below the engine 14 and surrounded by the frame 3. The gear case 6 receives a rotational force from a crankshaft (not shown) of the engine 14 and converts it into a reciprocating force to drive the blade unit 4 which extends to the front from the gear case 6. In this exemplary embodiment, the gear case 6 is fixed to the engine 14 with bolts strongly and rigidly, and the blade unit 4 is supported by the gear case 6 and the engine 14. In this way, the assembly of the engine 14, the gear case 6 and the blade unit 4 is held by the frame 3 via four antivibration devices, which will be described later. In this exemplary embodiment, the engine 14 is held indirectly by the frame 3 by holding the gear case 6 via the antivibration devices. The antivibration devices, which will be described later, are attached to the frame 3 in front-side fixing positions 7 and rear-side fixing positions 8 with bolts 30 (fixing elements) and are provided substantially horizontally so that an axial direction of each antivibration device is directed in a left-to-right direction. The assembly of the engine 14, the gear case 6 and the blade unit 4 is connected to the frame 3 by a wire 31, both ends of which are fixed with screws 32, 33, and therefore, the reliability in holding by the antivibration devices 20 can be increased.

The frame 3 and the rear handle 9 can rotate horizontally to the left and right relative to each other but are connected to each other so that looseness is suppressed to a minimum level. A known mechanism may be adopted for a connecting mechanism for connecting the frame 3 and the rear handle 9 so as to rotate horizontally to the left and right relatively, and therefore, a detailed description of such a connecting mechanism will be omitted here. The front handle 5 is fixed to sides of the frame with the bolts 30. A hand cover 3a for protecting the hand of the operator is provided on a front side of a horizontal portion of the front handle 5 and between the blade unit 4 and the front handle 5. The hand cover 3a is formed integrally with the frame 3.

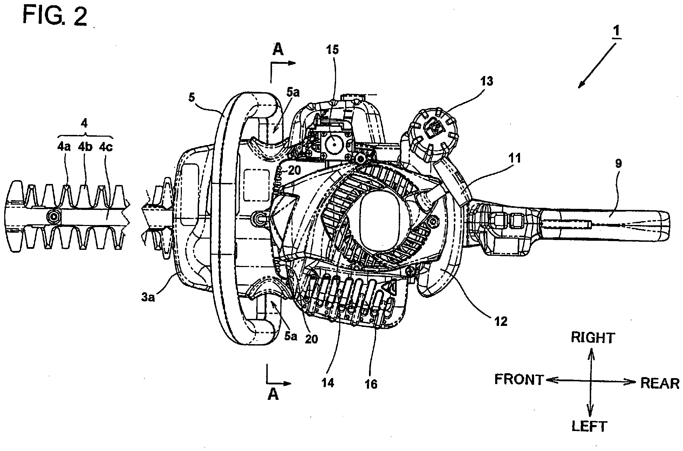

Fig. 2 is a plan view of the hedge trimmer 1 of the exemplary embodiment of the invention. A distinguishing feature of this exemplary embodiment is that an extension of an attachment portion 5a of the front handle 5 is disposed coaxially with the antivibration device 20 so that the front handle 5 and the antivibration device 20 are attached to the frame 3 by the common bolt 30 (refer to Fig. 1). Namely, although the front handle 5 and the antivibration device 20 are fixed to the frame 3 by the separate bolts in the related-art hedge trimmer 101 shown in Figs. 13 and 14, this operation does not have to be carried out in the exemplary embodiment of the invention. The vicinities of the attachment portions 5a of the front handle 5 extend coaxially with the antivibration devices 20 and project largely to the left and right from the hedge trimmer 1, so as to be slightly larger than a maximum width (a left-to-right length) of the engine cover 2. In this way, by making the front handle 5 sufficiently large in both a left-to-right direction and a vertical direction, the front handle 5 functions not only as a grip portion but also as a guard bar (a protection member) for protecting the engine. The hand guard 3a, which extends to the front, not only restrains trimmed shrubs from scattering towards the operator but also protects the hand of the operator by which the front handle 5 is gripped from contacting the blade unit 4. The hand guard 3a is formed integrally with the frame 3 and has a relatively large area.

The blade unit 4 is disposed so as to project to the front along a center line of the frame with respect to the left-to-right direction and is attached to the front of the gear case 6. The blade unit 4 includes a drive upper blade 4a, a drive lower blade 4b and a guide bar 4c. The drive upper blade 4a and the drive lower blade 4b are disposed so as to be held by lower fastening bolts, which are placed with a predetermined space therebetween, and the guide bar 4c, and are each caused to reciprocate in a front-to-rear direction in opposite phase by power outputted from the engine 14. In the drive upper blade 4a and the drive lower blade 4b, blades are formed laterally with respect to the extending direction of the blade unit 4, and objects to be cut are cut by using a shearing force between the drive upper blade 4a and the drive lower blade 4b. The operator holds the front handle 5 and the rear handle 9 and moves the hedge trimmer 1 horizontally to the left and right to cut objects to be cut such as branches and leaves.

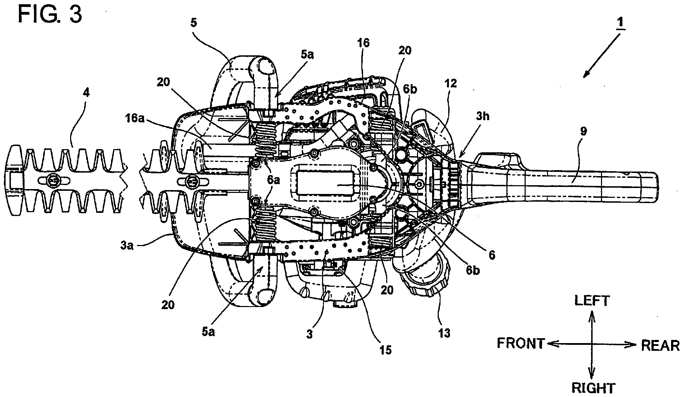

Fig. 3 is a bottom view of the hedge trimmer 1 according to the exemplary embodiment of the invention. As shown in this figure, the frame 3 is divided laterally as it extends towards the front from a rear connecting portion 3h with the rear handle 9, extends further to the front with a predetermined space between the centrally disposed gear case 6 and connects to the hand guard 3a at portions lying further forwards than the attachment portions 5a of the front handle 5 whereby the laterally divided frame portions are connected together. Attachment portions 6a, 6b where the antivibration devices 20 are bolted are formed at four locations along an outer circumference of the gear case 6, and female screws (not shown) are formed in the attachment portions 6a, 6b so that bolts, which will be described later, are screwed thereinto.

The antivibration device 20 includes, as a main element, a spring (an elastic member) which extends substantially horizontally inwards from the frame 3. The antivibration devices 20 hold the engine 14, the gear case 6 and the blade unit 4 to the frame 3 by tensile forces acting in directions in which the springs are stretched. In addition, a lateral load is also exerted on the spring in a substantially perpendicular direction to the direction in which the spring is stretched and contracted. However, the tensile force of the spring acts as a opposing force to this lateral load. In this way, in this exemplary embodiment, the engine 14 is not fixed directly to the frame 3 with bolts but is connected to the frame via the antivibration devices 20, whereby vibrations transmitted from the engine 14 to the front handle 5 and the rear handle 9 can be reduced largely, and the fatigue of the operator can be reduced accordingly. Additionally, a reaction force received by the blade unit 4 from objects being cut can effectively be absorbed by the antivibration devices 20, whereby the reaction force is prevented from being transmitted directly to the hand of the operator, thereby making it possible to realize the hedge trimmer 1 which can reduce the fatigue of the operator.

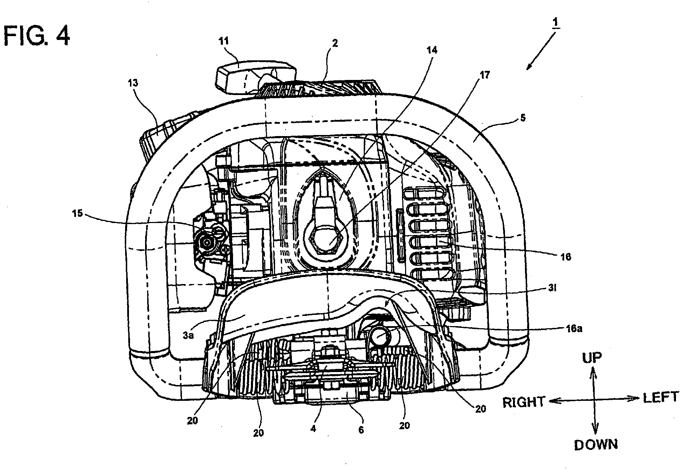

Fig. 4 is a front view of the hedge trimmer 1 according to the exemplary embodiment of the invention. As shown in this figure, the front handle 5 has a shape which follows an outer shell of the engine cover 2, and due to the shape, the front handle 5 also functions as a protection member to protect the engine 14 when the hedge trimmer 1 is placed on the floor transversely (so that a left-hand side part or right-hand side part of the front handle 5 touches the floor surface). The attachment portions 5a can be disposed close to the gear case 6 and the engine 14 as a result of the front handle 5 being attached integrally to the attachment portion between the gear case 6 and the frame 3, whereby the operator can hold the hedge trimmer 1 in a position lying in the vicinity of the center of gravity thereof. Left and right gripping portions of the front handle 5 can be formed long in the vertical direction by the attachment portions 5a being positioned close to a bottom surface of the hedge trimmer 1. By forming the front handle 5 in that way, even in the event that the center of gravity is located in the vicinity of a position lying between the engine 14 and the gear case 6 when the hedge trimmer 1 is used with the engine 14 turned to the left or right at right angles, the operator can hold the hedge trimmer 1 in a position lying on a vertical plane which passes through substantially the center of gravity of the hedge trimmer 1, whereby the operator can hold the hedge trimmer 1 easily. In addition, by allowing a wider space to be defined between the engine 14 and the left and right gripping portions of the front handle 5, the operator can hold the hedge trimmer 1 more easily. In Fig. 4, the antivibration devices 20 are disposed on both left- and right-hand sides of the gear case 6, and the antivibration devices 20 are disposed so that the axes of the springs are substantially horizontal. The front antivibration devices 20 are mounted slightly lower than the rear antivibration devices 20. Note that the arrangement of the antivibration devices 20 is not limited to the arrangement depicted in the drawings, and therefore, the type, arrangement and number of antivibration devices may arbitrarily be determined according to the type of the working mechanism such as the blade unit 4, the shape of the gear cage 6 and the vibration characteristics of the engine 14.

The engine 14 of the hedge trimmer 1 has a cylinder which extends in the front-to-rear direction, and a piston, which is not shown, reciprocates in the front-to-rear direction in an interior of the piston. A spark plug 17 is disposed in the vicinity of an apex portion of the piston. The carburetor 15 is disposed on a right-hand side of the engine 14, and the exhaust device 16 is disposed on a left-hand side of the engine 14. An exhaust pipe 16a is connected to the exhaust device 16 so as to extend to the front, so that exhaust gases are discharged to the front along the blade unit 4 in the vicinity of the blade unit 4. A covering portion 3i having a partially upwardly curved shape is formed on the hand guard 3a to evade the influence of heat from the exhaust pipe 16a.

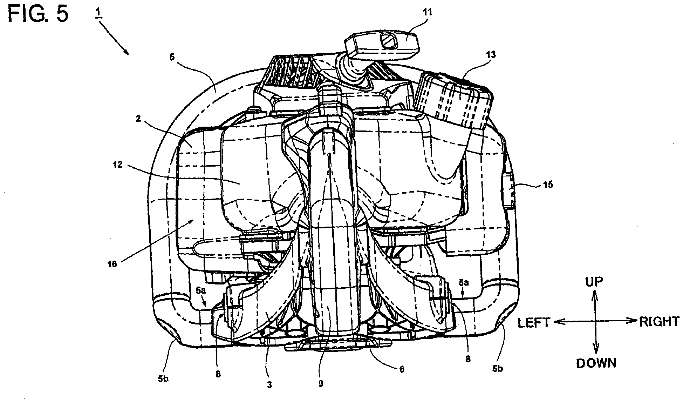

Fig. 5 is a rear view of the hedge trimmer 1 according to the exemplary embodiment of the invention. It is shown in this figure that both left-hand edge and right-hand edge of the front handle 5 are disposed so as to project further to the left and right of the hedge trimmer 1 than the engine 14 and the peripheral equipment thereof. In particular, the exhaust device 16 is disposed on the left-hand side of the figure and hence, the temperature is increased to a relatively high temperature on the left-hand side of the hedge trimmer 1. Therefore, the engine cover 2 which covers the exhaust device 16 is made difficult to contact the floor surface even when the hedge trimmer 1 is placed so that the left-hand side of the hedge trimmer 1 is positioned downward. In this exemplary embodiment, the fuel tank 12 is disposed at the rear of the engine cover 2, and a fuel cap 13 is disposed on a right-hand side of the fuel tank 12, which corresponds to the side of the hedge trimmer 1 opposite to the side where the exhaust device 16 is disposed (refer to Fig. 4), that is, the carburetor 15 side of the hedge trimmer 1. An inner end portion of the attachment portion 5a which extends horizontally inwards of the front handle 5 is fixed to the frame 3. A depression 5b and a through hole, which will be described later, are formed in the attachment portion 5a of the front handle 5 so that a bolt is passed therethrough. In addition, the frame 3 is formed so as to slightly project to the left and right in the rear-side fixing positions 8 due to cylindrical bases being formed in the rear-side fixing positions 8 to hold attachment bolts 30.

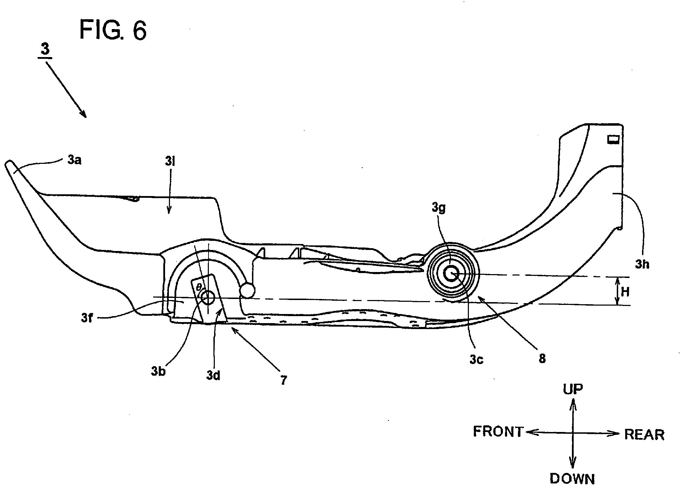

Next, the shape of the frame 3 will be described by reference to Fig. 6. Fig. 6 is a side view of the frame 3. The frame 3 is formed of a synthetic resin such as a reinforced plastic and is manufactured through integral molding, including the front hand guard 3a. The substantially semi-cylindrical covering portion 3i is formed towards the rear from the hand guard 3a so as to cover an upper side of the exhaust device 16. Attachment holes 3b are formed in the front-side fixing positions 7 on the frame 3 for attachment of the front handle 5, and a substantially circular flat surface portion 3f is formed round the circumference of each of the attachment holes 3b. Further, a groove portion 3d having a substantially rectangular shape as viewed from the side thereof is formed in the vicinity of the center of the flat surface portion 3f and round the circumference of the attachment hole 3b. The groove portion 3d is formed so that the front handle 5 is attached to the frame 3 so as to be inclined obliquely to the front at an attachment angle θ. In this exemplary embodiment, θ is set to 70 degrees, but θ can be set to angles ranging approximately from 45 to 90 degrees.

In the rear-side fixing positions 8 on the frame 3, annular flat surface portions 3g are formed for attachment of the antivibration devices 20, and attachment holes 3c for fixing bolts are formed thereto, which will be described later. In this exemplary embodiment, the height of the attachment hole 3b in the front-side fixing position 7 is lower by an amount H than the height of the attachment hole 3c in the rear-side fixing position 8. In this way, by attaching the front antivibration devices 20 in the lower position, the interference of the antivibration devices 20 with the exhaust device 16 can be avoided, thereby making it possible to keep the exhaust device 16 upwardly away from a hedge being trimmed.

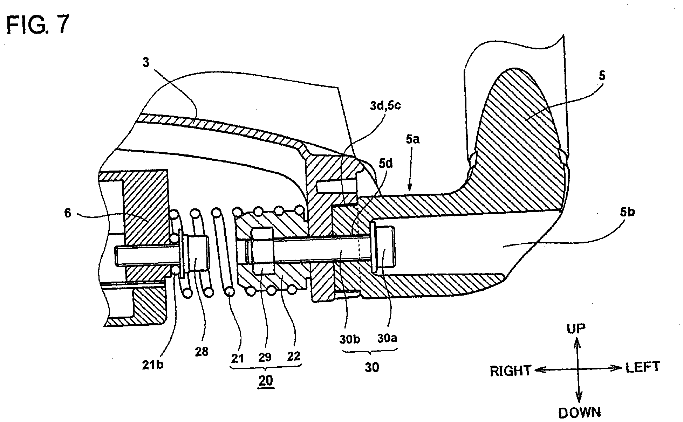

Next, the construction of the antivibration device 20 will be described in detail by reference to Figs. 7 to 10. Fig. 7 is a partial sectional view of a portion of the hedge trimmer 1 which lies in the vicinity of the attachment portion of the front handle (a sectional view taken along the line A-A in Fig. 2). The antivibration device 20 includes mainly the spring 21 and the spring holder 22. The spring holder 22 is formed of a synthetic resin such as plastics through integral molding, and the nut 29 is embedded in an interior of the spring holder 22 in advance. The spring holder 22 functions as a fastening tool (the nut 29) corresponding to the bolt 30 in one way and functions as a fixing portion for fixing the spring 21 in the other way. The front handle 5 has high rigidity to bear the weight of the hedge trimmer 1 and is fixed to the frame 3 with the bolts 30. As this occurs, the nut 29 embedded in the spring holder 22 functions as a fixing tool for fixing the bolt 30, as a result of which the spring 21 and the front handle 5 can be fixed to the frame simultaneously by screwing the bolt 30 into the nut 29 in the spring holder 22.

Substantially rectangular projecting portions 5c and the groove portions 3d having the shape which matches the shape of the projecting portion 5c are formed on the front handle 5 and the frame 3, respectively, to prevent the twisting of the front handle 5 in the front-to-rear direction. The rotation of the front handle 5 about the through hole or insertion holes 5d can be prevented by the engagement of the projecting portions 5c into the groove portions 3d. The depression 5b is formed in an interior of each of the attachment portions 5a of the front handle 5 so as to extend in the axial direction, and the through hole 5d is formed in the vicinity of a bottom portion of the depression 5b. For example, a washer installed hexagonal socket bolt can be used for the bolt 30.

One end of the spring 21 is fixed to the gear case 6 by a bolt 28. For example, a washer installed hexagonal socket bolt can be used for the bolt 28. However, the spring 21 may be fixed to the gear case 6 with a different fixing member such as a screw. In order for the spring 21 to be fixed to the gear case 6 with the bolt 28, the one end of the spring 21 is formed into an end portion 21b where an inside diameter of a winding is smaller than a diameter of a head portion of the bolt 28.

A spiral groove is formed in an outer circumference of the spring holder 22 to hold the spring 21, and the spring holder 22 is screwed into an interior of the spring 21 so that the windings of the spring 21 reach an end portion of the spring holder 22. The spring 21 is made up of a spring material which is manufactured spirally. The spring 21 is preferably a compression spring. A known spring steel can be used as the material of the spring 21. Further, this exemplary embodiment is characterized in that the spring 21 is not wound dextrorsely (clockwise), which is general, but is wound sinistrorsely (counterclockwise). This winding direction is opposite to the screwing direction of the bolt 30 (dextrorse).

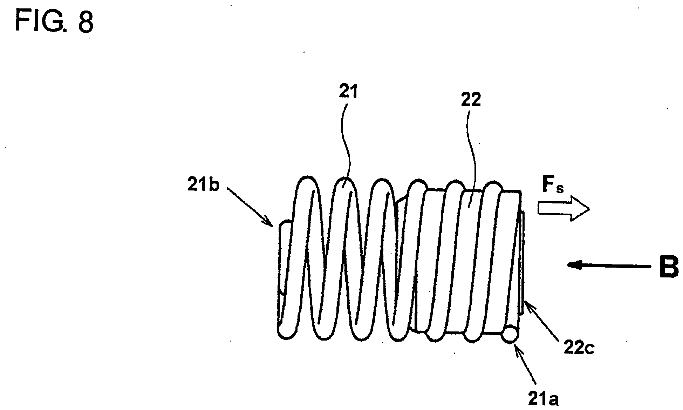

Fig. 8 is an external view of the antivibration device 20 of the hedge trimmer 1 according to the exemplary embodiment of the invention. As is shown in the figure, the antivibration device 20 is made up of an assembly of the spring 21 and the spring holder 22. The inner end portion (the end portion facing the gear case 6) 21b of the spring 21 is formed so that the inside diameter decreases, whereas an outer end portion (an end portion facing the frame 3) 21a is formed so that an inside diameter remains constant. The screw groove is formed in the outer circumference of the spring holder 22 so that the spring material of the spring 21 is wound therearound to exhibit a screw effect. The spring holder 22 is only screwed into the spring 21, and therefore, the spring holder 22 can easily be installed into or removed from the spring 21. In addition, the screw groove in the spring holder 22 is formed sinistrorsely so as to match the winding direction of the spring 21.

The spring holder 22 is assembled into the spring 21 by inserting the spring holder 22 into the spring 21 while rotating the spring holder 22 counterclockwise as screwing a sinistrorse screw. The spring holder 22 is assembled to the frame 3 with the normal dextrorse bolt 30. Therefore, when screwing the bolt 30, the spring holder 22 and the bolt 30 attempt to rotate in the same direction (clockwise) temporarily. However, the spring 21 is sinistrorse, and therefore, when the spring holder 22 attempts to rotate clockwise, a force F2 is exerted on the spring holder 22 so as to cause it to project towards the frame 3 as a result of a relative action with the spring 21. The force F2 increases in proportion to the torque with which the bolt 30 is screwed, whereby a large contact surface pressure is generated in an uneven plane 22c between the frame 3 and the spring holder 22, whereby the necessity of fixing the spring holder 22 to the frame 3 so as not to rotate when screwing the bolt 30 is obviated.

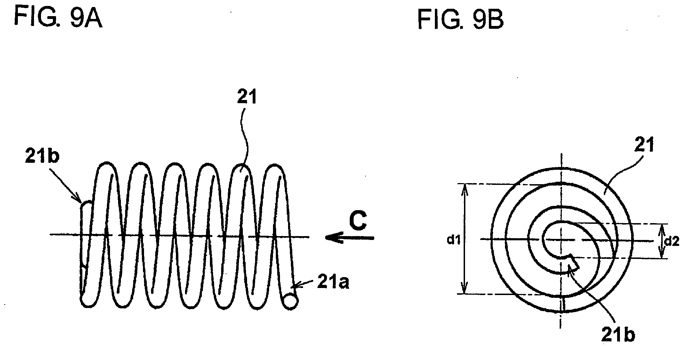

Fig. 9 (9A, 9B) shows external views of the spring 21, of which Fig. 9A is a side view, and Fig. 9B is an end view as viewed in a direction indicated by an arrow C in Fig. 9A. The inside diameter of the spring 21 from the one end portion 21a to the vicinity of a central portion thereof stays constant as an inside diameter d1 but decreases to an inside diameter d2 at the other end portion 21b, resulting in a relationship of d1>d2. The inside diameter d2 is formed so as to be substantially the same as an outside diameter of a shaft portion of the bolt 28.

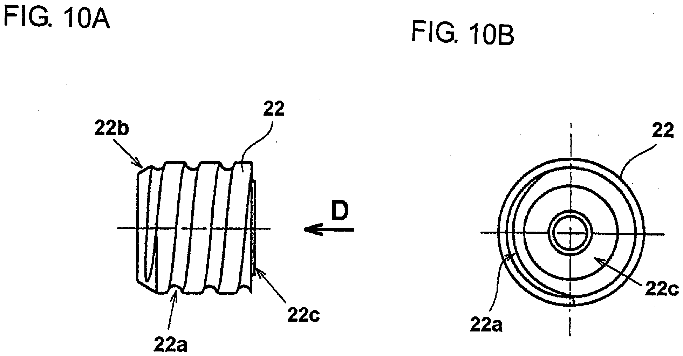

Fig. 10 (10A, 10B) shows external views of the spring holder 22, of which Fig. 10A is a side view, and Fig. 10B is an end view as seen in a direction indicated by an arrow D in Fig. 10A. The spiral groove portion 22a is formed in the outer circumferential portion of the spring holder 22. The groove portion 22a has a substantially semi-spherical groove shape so as to match the shape of the spring 21. Intervals between the adjacent groove portions 22a substantially coincide with intervals between the windings of the spring 21 with no load exerted thereon. An inclined portion 22, which is diametrically constricted, is formed at one end of the spring holder 22 so as to facilitate the screwing of the spring holder 22 into the spring 21. In addition, by forming the inclined portion 22b, the windings of the spring 21 can be prevented from contacting a corner portion of the spring holder 22 when a compression load is exerted on the spring 21 in the axial direction, thereby making it possible to extend the life of the spring 21. Further, by forming the inclined portion 22b, there is provided an advantage that the spring 21 is prevented from being deformed when a lateral load is exerted on the spring 21. On the other hand, the uneven plane 22c, which configures a contact area when the spring holder 22 is fixed to the frame 3, is formed at the other end of the spring holder 22.

Thus, as has been described heretofore, according to the exemplary embodiment, the number of parts of the hedge trimmer 1 with the antivibration devices can be reduced. Further, the assembly of the front handle 5 and the antivibration devices 20 is facilitated, thereby making it possible to achieve a reduction in manufacturing costs. In addition, since the spring 21 is used as the antivibration device 20, the antivibration mechanism can be obtained which is compact in size and high in antivibration effect. Further, a direct transmission of vibrations can be suppressed which occurs by the contact of the power unit with the antivibration mechanisms as a result of the excessive load during the actual trimming work, thereby making it possible to reduce largely a possibility of failure of the springs 21.

### [Second Exemplary Embodiment]

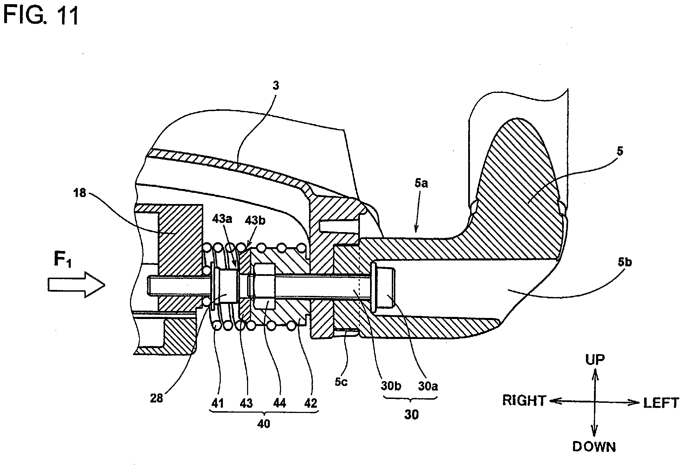

Next, a antivibration device 40 according to a second exemplary embodiment of the invention will be described by reference to Fig. 11. Fig. 11 is a sectional view of an attachment portion between a front handle 5 and a antivibration device 40 according the second exemplary embodiment of the invention. In the figure, a state is shown in which a spring 41 receives a compression load F1 acting in an axial direction and is then displaced largely in the axial direction. In the second exemplary embodiment, the configuration of a spring holder 42 differs from the first exemplary embodiment, and an elastic material 43 such as rubber is attached to an inner circumferential end portion of the spring holder 42, that is, to a distal end of an end of the spring holder 42 which is opposite to an end facing a frame. The elastic material 43 is formed together with the spring holder 42 through integral molding so as to be embedded in the spring holder 42. By attaching the elastic material 43 in the way described above, even in the event that the spring 41 receives the compression load F1 to thereby be contracted, bringing a head portion of a bolt 28 into contact with the spring holder 42 as is shown in Fig. 11, the bolt 28 is brought into contact with the elastic member 43, thereby making it possible to restrain largely a direct transmission of vibrations resulting from the contact to the frame 3 and the front handle 5. In addition, it can be prevented that an excessive stress is generated locally by the contact of the spring 41 and the end portion of the spring holder 22, thereby making is possible to extend largely the life of the antivibration device 40.

### [Third Exemplary Embodiment]

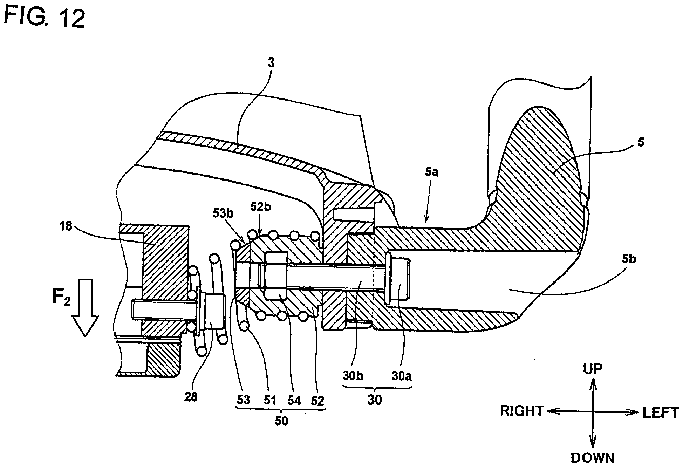

Next, the construction of an antivibration device according to a third exemplary embodiment of the invention will be described by reference to Fig. 12. Fig. 12 is a sectional view of an attachment portion between a front handle 5 and an antivibration device 50 according the third exemplary embodiment of the invention. In the figure, a state is shown in which a spring 51 receives a radial load F2 acting in a substantially vertical direction of the spring 51 and is then displaced largely in a lateral direction. In the third exemplary embodiment, the configuration of a spring holder 52 differs from the first exemplary embodiment, and an elastic material 53 such as rubber is attached to an inner circumferential end portion of the spring holder 52. In addition, the thickness of the elastic material 53 (an axial length) is made thicker than the elastic material 43 of the second exemplary embodiment, and areas of an inclined portion 53b of the elastic material 53 and an inclined portion 52b of the spring holder 52 are increased. By configuring the antivibration device 50 in this way, even in the event that the radial load F2 which is an excessive lateral stress (in a direction substantially vertical to an axial direction) is generated in the spring 51 as a result of the spring 51 being bent by the strong contact of a portion of the spring holder 52 which lies in the vicinity of a distal end thereof and an inside diameter portion of the spring, the spring 51 which is so deformed is brought into contact with the inclined portions 53b, 52b of the spring holder 52 in a good manner, thereby making it possible to avoid a local deformation of the spring 51. In addition, as with the second exemplary embodiment, a direct transmission of vibrations resulting from the contact between the spring 51 and the end portion of the spring holder 52 to a frame 3 and a front handle 5 can be restrained largely.

While the invention has been described based on the exemplary embodiments, the invention is not limited thereto and can be altered variously without departing from the scope thereof. For example, in the exemplary embodiments, while the hedge trimmer is described as the example of the portable working machine, the invention is not limited thereto. The invention may be applied to other working machines. In addition, the shapes of the front handle, the rear handle and the frame are not limited to those described in the exemplary embodiments. For example, a horizontal portion of the front handle may be curved upwardly or to the front so as to ensure a sufficient distance between the engine cover and the gripping portion of the front handle.

## Claims

1. A portable working machine comprising:
an engine (14);
a front handle (5) and a rear handle (9);
an elastic member (20, 40, 50);
a power conversion unit (6) for transmitting an output from the engine to drive a working tool (4); and a frame (3), **characterized in that** the front and rear handles (5, 9) are provided to the frame (3), the engine (14), the power conversion unit (6) and the working tool (4) are held by the frame via the elastic member (20, 40, 50), and
the front handle (5) and the elastic member (20) are simultaneously held to the frame (3) by the same fixing element (30).

2. A portable working machine according to claim 1,
wherein the elastic member is a spring (21, 41, 51).

3. A portable working machine according to claim 2, further comprising a spring holder (22, 42, 52),
wherein the spring (21, 41, 51) is attached to the frame (3) via the spring holder (22, 42, 52),
wherein the front handle (5) is attached to the frame (3) at a hole (5d) formed in an end portion of the front handle, by the fixing element (30), and
wherein both the spring holder (22, 42, 52) and the front handle (5) are fixed to the frame (3) by the fixing element (30).

4. A portable working machine according to claim 3,
wherein the spring holder (22, 42, 52) includes a groove (22a) for fixing the spring (21, 41, 51) and a fixing portion (29, 44, 54) which engages with the fixing element (30), and
wherein the fixing element (30) passes through the hole (5d) formed in the end portion of the front handle (5) and a through hole (3b) formed in the frame (3) to be screwed with the fixing portion (29, 44, 54).

5. A portable working machine according to claim 4,
wherein the spring holder (22, 42, 52) is a substantially cylindrical member and the groove (22a) is formed in an outer circumferential portion of the cylindrical member so as to match a shape of the spring (21, 41, 51), and
wherein the fixing portion is a female screw formed in an axial direction of the spring holder (22, 42, 52) or a nut (29, 44, 54) incorporated in an interior of the spring holder.

6. A portable working machine according to claim 5,
wherein the fixing element (30) is a dextrorse bolt or a dextrorse screw, and the spring (21, 41, 51) and the groove (22a) are formed sinistrorsely.

7. A portable working machine according to claim 6,
wherein a projecting portion (5c) for setting an attaching inclination angle is provided to the front handle (5),
wherein a groove portion (3d) for accommodating the projecting portion (5c) is formed to the frame (3), and
wherein the front handle (5) is fixed to the frame (3) so that the projecting portion (5c) fits in the groove portion (3d).

8. A portable working machine according to any of claims 1 to 7,
wherein the frame (3) is disposed so as to extend in a horizontal direction, and
wherein the front handle (5) is attached to the frame (3) so as to incline forwardly with respect to a longitudinal direction of the frame at an angle ranging approximately from 90 degrees to 45 degrees.

9. A portable working machine according to claim 8,
wherein an elastic member (43, 53) is provided at a distal end of the spring holder (22, 42, 52) which is opposite to a side facing the frame (3), and
wherein a tapered inclined portion is formed in a vicinity of the distal end of the spring holder (22, 42, 52).

10. A portable working machine according to any of claims 1 to 7,
wherein the portable working machine is a hedge trimmer including a reciprocating trimmer blade (4a, 4b) as the working tool.

## Patentansprüche

1. Tragbare Arbeitsmaschine umfassend:
einen Motor (14);
einen vorderen Griff (5) und einen hinteren Griff (9);
ein elastisches Element (20, 40, 50);
eine Leistungswandlereinheit (6) zum Übertragen einer Abgabe des Motors für den Antrieb eines Arbeitswerkzeugs (4); und
einen Rahmen (3),
**dadurch gekennzeichnet, dass**
der vordere und der hintere Griff (5, 9) am Rahmen (3) vorgesehen sind,
der Motor (14), die Leistungswandlereinheit (6) und das Arbeitswerkzeug (4) über das elastische Element (20, 40, 50) vom Rahmen gehalten werden, und
der vordere Griff (5) und das elastische Element (20) vom gleichen Befestigungselement (30) gleichzeitig am Rahmen (3) gehalten werden.

2. Tragbare Arbeitsmaschine nach Anspruch 1,
wobei das elastische Element eine Feder (21, 41, 51) ist.

3. Tragbare Arbeitsmaschine nach Anspruch 2 mit einem Federhalter (22, 42, 52),
wobei die Feder (21, 41, 51) über den Federhalter (22, 42, 52) am Rahmen (3) angebracht ist,
wobei der vordere Griff (5) an einem Loch (5d), das in einem Endabschnitt des vorderen Griffs ausgebildet ist, mittels des Befestigungselements (30) am Rahmen (3) angebracht ist, und
wobei sowohl der Federhalter (22, 42, 52) als auch der vordere Griff (5) von dem Befestigungselement (30) am Rahmen (3) befestigt sind.

4. Tragbare Arbeitsmaschine nach Anspruch 3,
wobei der Federhalter (22, 42, 52) eine Vertiefung (22a) zum Befestigen der Feder (21, 41, 51) und einen Befestigungsabschnitt (29, 44, 54) in Eingriff mit dem Befestigungselement (30) enthält, und
wobei das Befestigungselement (30) durch das im Endabschnitt des vorderen Griffs (5) ausgebildete Loch (5d) und ein in dem Rahmen (3) ausgebildetes Durchgangsloch (3b) hindurchtritt, um mit dem Befestigungsabschnitt (29, 44, 54) verschraubt zu werden.

5. Tragbare Arbeitsmaschine nach Anspruch 4,
wobei der Federhalter (22, 42, 52) ein im Wesentlichen zylindrisches Element ist und die Vertiefung (22a) unter Passung zur Form der Feder (21, 41, 51) im Außenumfangsabschnitt des zylindrischen Elements ausgebildet ist, und
wobei der Befestigungsabschnitt ein in Axialrichtung des Federhalters (22, 42, 52) ausgebildetes Innengewinde oder eine in das Innere des Federhalters eingebrachte Mutter (29, 44, 54) ist.

6. Tragbare Arbeitsmaschine nach Anspruch 5,
wobei das Befestigungselement (30) ein rechtsgängiger Bolzen oder eine Rechtsschraube ist und die Feder (21, 41, 51) und die Vertiefung (22a) linksgängig ausgebildet sind.

7. Tragbare Arbeitsmaschine nach Anspruch 6,
wobei am vorderen Griff (5) ein Vorsprungsabschnitt (5c) zum Festlegen eines Anbringungsneigungswinkels vorgesehen ist,
wobei am Rahmen (3) ein Vertiefungsabschnitt (3d) zur Aufnahme des Vorsprungsabschnitts (5c) ausgebildet ist, und
wobei der vordere Griff (5) so am Rahmen (3) angebracht ist, dass der Vorsprungsabschnitt (5c) in den Vertiefungsabschnitt (3d) passt.

8. Tragbare Arbeitsmaschine nach einem der Ansprüche 1 bis 7,
wobei der Rahmen (3) so angeordnet ist, dass er in horizontale Richtung verläuft, und
wobei der vordere Griff (5) so am Rahmen (3) angebracht ist, dass er bezüglich einer Längsrichtung des Rahmens mit einem Winkel vorwärts geneigt ist, der etwa 90 bis 45 Grad beträgt.

9. Tragbare Arbeitsmaschine nach Anspruch 8,
wobei am fernen Ende des Federhalters (22, 42, 52), das sich gegenüber einer dem Rahmen (3) zugewandten Seite befindet, ein elastisches Element (43, 53) vorgesehen ist, und
in der Gegend des fernen Endes des Federhalters (22, 42, 52) ein verjüngter geneigter Abschnitt ausgebildet ist.

10. Tragbare Arbeitsmaschine nach einem der Ansprüche 1 bis 7,
wobei die tragbare Arbeitsmaschine eine Heckenschere mit einem oszillierenden Scherblatt (4a, 4b) als Arbeitswerkzeug ist.

## Revendications

1. Machine de travail portable comportant :
un moteur (14),
une poignée avant (5) et une poignée arrière (9),
un élément élastique (20, 40, 50),
une unité de conversion de puissance (6) destinée à transmettre une sortie du moteur pour entraîner un outil de travail (4), et
un châssis (3), **caractérisée en ce que**
les poignées avant et arrière (5, 9) sont agencées sur le châssis (3),
le moteur (14), l'unité de conversion de puissance (6) et l'outil de travail (4) sont maintenus par le châssis via l'élément élastique (20, 40, 50), et
la poignée avant (5) et l'élément élastique (20) sont simultanément maintenus sur le châssis (3) par le même élément de fixation (30).

2. Machine de travail portable selon la revendication 1, dans laquelle l'élément élastique est un ressort (21, 41, 51).

3. Machine de travail portable selon la revendication 2, comportant en outre un support de ressort (22, 42, 52),
dans laquelle le ressort (21, 41, 51) est fixé au châssis (3) via le support de ressort (22, 42, 52),
dans laquelle la poignée avant (5) est fixée au châssis (3) au niveau d'un trou (5d) formé dans une partie d'extrémité de la poignée avant, par l'élément de fixation (30), et
dans laquelle le support de ressort (22, 42, 52) et la poignée avant (5) sont tous deux fixés au châssis (3) par l'élément de fixation (30).

4. Machine de travail portable selon la revendication 3,
dans laquelle le support de ressort (22, 42, 52) inclut une gorge (22a) pour fixer le ressort (21, 41, 51) et une partie de fixation (29, 44, 54) qui vient en prise avec l'élément de fixation (30), et
dans laquelle l'élément de fixation (30) passe à travers le trou (5d) formé dans la partie d'extrémité de la poignée avant (5) et un trou traversant (3b) formé dans le châssis (3) pour être vissé avec la partie de fixation (29, 44, 54).

5. Machine de travail portable selon la revendication 4,
dans laquelle le support de ressort (22, 42, 52) est un élément sensiblement cylindrique et la gorge (22a) est formée dans une partie circonférentielle extérieure de l'élément cylindrique de manière à correspondre à une forme du ressort (21, 41, 51), et
dans laquelle la partie de fixation est une vis femelle formée dans une direction axiale du support de ressort (22, 42, 52) ou un écrou (29, 44, 54) incorporé dans un intérieur du support de ressort.

6. Machine de travail portable selon la revendication 5,
dans laquelle l'élément de fixation (30) est un boulon dextrorse ou une vis dextrorse, et le ressort (21, 41, 51) et la gorge (22a) sont formés de manière sinistrorse.

7. Machine de travail portable selon la revendication 6,
dans laquelle une partie saillante (5c) pour régler un angle d'inclinaison de fixation est prévue sur la poignée avant (5),
dans laquelle une partie de gorge (3d) pour recevoir la partie saillante (5c) est formée sur le châssis (3), et
dans laquelle la poignée avant (5) est fixée au châssis (3) de sorte que la partie saillante (5c) s'insère dans la partie de gorge (3d).

8. Machine de travail portable selon l'une quelconque des revendications 1 à 7,
dans laquelle le châssis (3) est disposé de manière à s'étendre dans une direction horizontale, et
dans laquelle la poignée avant (5) est fixée au châssis (3) de manière à s'incliner vers l'avant par rapport à une direction longitudinale du châssis à un angle variant d'approximativement 90 degrés à 45 degrés.

9. Machine de travail portable selon la revendication 8,
dans laquelle un élément élastique (43, 53) est agencé sur une extrémité distale du support de ressort (22, 42, 52) qui est opposée à un côté dirigé vers le châssis (3), et
dans laquelle une partie inclinée amincie est formée au voisinage de l'extrémité distale du support de ressort (22, 42, 52).

10. Machine de travail portable selon l'une quelconque des revendications 1 à 7,
dans laquelle la machine de travail portable est un taille-haie incluant une lame de taille-haie animée d'un mouvement de va-et-vient (4a, 4b) en tant qu'outil de travail.
